# EUROPEAN PATENT APPLICATION

(11) **EP 4 606 604 A1**
(43) Date of publication of application: **27.08.2025**
(21) Application number: 25159130.1
(22) Date of filing: 20.02.2025
(51) Int. Cl.: B60G 5/04, B60G 11/04, B60G 11/08

(54) **IMPROVED SUSPENSION SYSTEM**

(30) Priority: 22.02.2024 IT 202400003799
(71) Applicant: IVECO S.P.A., 10156 Torino (IT)
(72) Inventor: PEREIRA DE LEMOS, Josè Francivaldo, 10156 TORINO (IT)
(74) Representative: Studio Torta S.p.A.

(57) **Abstract**

A suspension system (3) to connect at least two axles (4) to a frame (2) of a vehicle (1), the vehicle extending along a longitudinal axis (A),
the suspension system (3) comprises an elastic element (5) extending along the longitudinal axis and comprising a first end (5a), a second end (5b) and an intermediate portion (5c), the intermediate portion (5c) being connected to the respective axle (4), the first and second ends (5a, 5b) being connected to the frame (2) via respective first and second rockers (7, 8), the suspension system (3) further comprising at least a connecting element (18) connecting two between the first and second rockers (7, 8) to each other.

## Description

### CROSS-REFERENCE TO RELATED APPLICATIONS

This patent application claims priority from Italian patent application no. 102024000003799 filed on February 22, 2024, the entire disclosure of which is incorporated herein by reference.

### TECHNICAL FIELD

The present invention relates to a suspension system for a vehicle.

The present invention is applicable preferably, but not exclusively, to a heavy vehicle, such as a truck. Hereinafter, reference will be made to this application by way of example.

### PRIOR ART

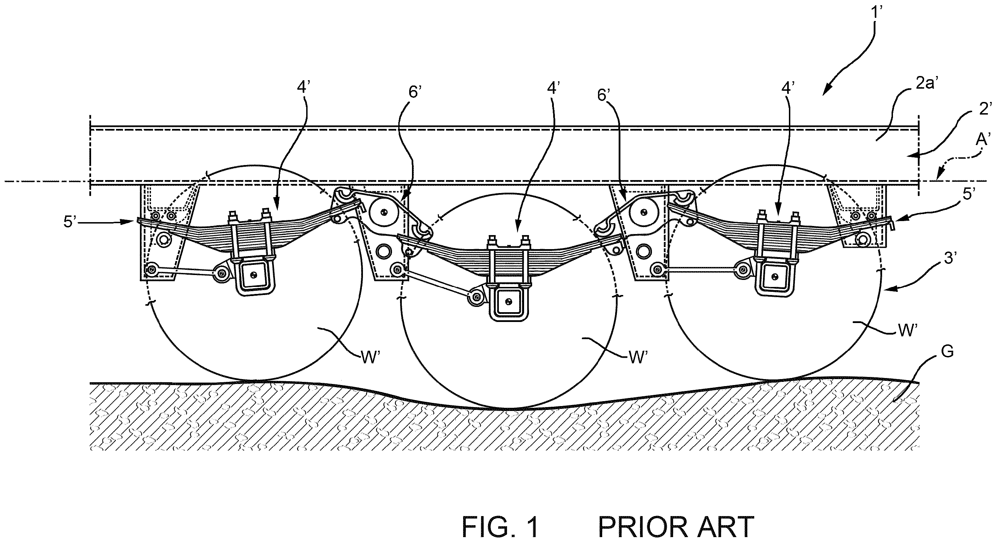

Fig. 1 illustrates a vehicle 1' comprising a suspension system 3' to support a plurality of wheels W' in contact with the ground G' with respect to a frame 2' of the vehicle 1'.

In detail, the frame 2' includes a pair of side members 2a' extending along a longitudinal axis A', the suspension system 3' comprises a plurality of leaf springs 4', one for each wheel W'.

These leaf springs 4' are supported in a central portion by the axle that supports the wheel W' and at the ends with respect to the connection 5', 6' to the side member 2a'.

In detail, the ends of the external wheels W' in longitudinal direction are supported via a first movable connection 5', in contact with or fixed to the side member 2a' while the ends of the internal wheels W' in longitudinal direction are supported via a second connection 6', a rocker.

The rocker connection 6' is configured to allow the relative movement between the leaf springs 4' to follow the asperities of the ground G', distributing the loads between the axles connected by the suspension system 3'.

However, this configuration generates overloads in the ends of the leaf springs 4' close to the first connections 5'. In fact, as the second connections 6' allow a desired wide movement of the leaf spring 4', this movement is compensated for by bending of the end connected by the first connections 5'.

Therefore, it is evident how these overloads tend, over time, to reduce the useful life of the leaf springs 4' with consequent malfunctioning and possible potentially catastrophic breakages.

Therefore, there is the need to provide a suspension system that maintains or increases the capacities of the current suspension system, although having greater reliability and a longer useful life.

The object of the present invention is to satisfy the aforesaid requirements in an optimised and cost-effective manner.

### SUMMARY OF THE INVENTION

The aforesaid object is achieved by a suspension system and a vehicle as claimed in the appended claims, which are an integral part of the present description.

### BRIEF DESCRIPTION OF THE DRAWINGS

For a better understanding of the present invention, a preferred embodiment is described below, by way of nonlimiting example and with reference to the accompanying drawings, wherein:
- Fig. 1 is a schematic side view of a vehicle suspension system according to the prior art;
- Fig. 2 is a schematic side view of a vehicle suspension system according to a first embodiment of the invention;
- Figs. 3A and 3B are schematic side views of the suspension system of Fig. 2 in different conditions of use;
- Fig. 4 is a schematic side view of a vehicle suspension system according to a second embodiment of the invention;
- Fig. 5 is a schematic side view of the suspension system of Fig. 3 in a condition of use;
- Fig. 6 is a schematic side view of a vehicle suspension system according to a third embodiment of the invention;
- Fig. 7 is a schematic side view of the suspension system of Fig. 6 in a condition of use;
- Fig. 8 is a schematic side view of a vehicle suspension system according to a fourth embodiment of the invention; and
- Fig. 9 is a schematic side view of the suspension system of Fig. 8 in a condition of use.

### DETAILED DESCRIPTION OF THE INVENTION

In the figures illustrated, the reference number 1 generically indicates a portion of vehicle comprising a frame 2 extending along a longitudinal axis A of the vehicle.

The vehicle 1 comprises a plurality of wheels W supported by a relative axle 4 and configured to allow the movement of the vehicle 1 on the ground G.

The axles 4 are operatively connected to the frame 2 via a suspension system 3 according to the invention configured to allow a relative movement between the plurality of axles 4 and the frame 2.

In particular, the axles 4 are connected by the suspension system 3 in a tandem configuration, i.e., the movement of the one affects the load imparted to the other axles 4.

The suspension system 3 essentially comprises an elastic element, such as a leaf spring 5 operatively placed between two axles 4 of each axle and the frame 2 to allow the movable connection thereof, as will be described below.

In the embodiments illustrated, a semi-elliptical leaf spring 5 with plates with a rectangular cross-section is represented purely by way of example.

Each leaf spring 5 comprises a first end 5a, and a second end 5b extending from a central portion 5c.

As can be seen in the enlarged portion, the central portion 5c is connected by a connection system to the axle 4, not described in more detail for the sake of brevity and of known type.

In particular, the first and second ends 5a, 5b of the leaf springs 5 can be internal, i.e., comprised between two axles 4, or external, i.e., side by side with only one axle and actually the longitudinally external end of the suspension system 3.

According to the invention, the first and second ends 5a, 5b of the leaf springs 5 are connected to respective at least one first and at least one second rocker 7, 8, at least one of said at least one first rocker 7 and said at least one second rocker 8 are operatively connected to each other to allow the transfer of a force between them.

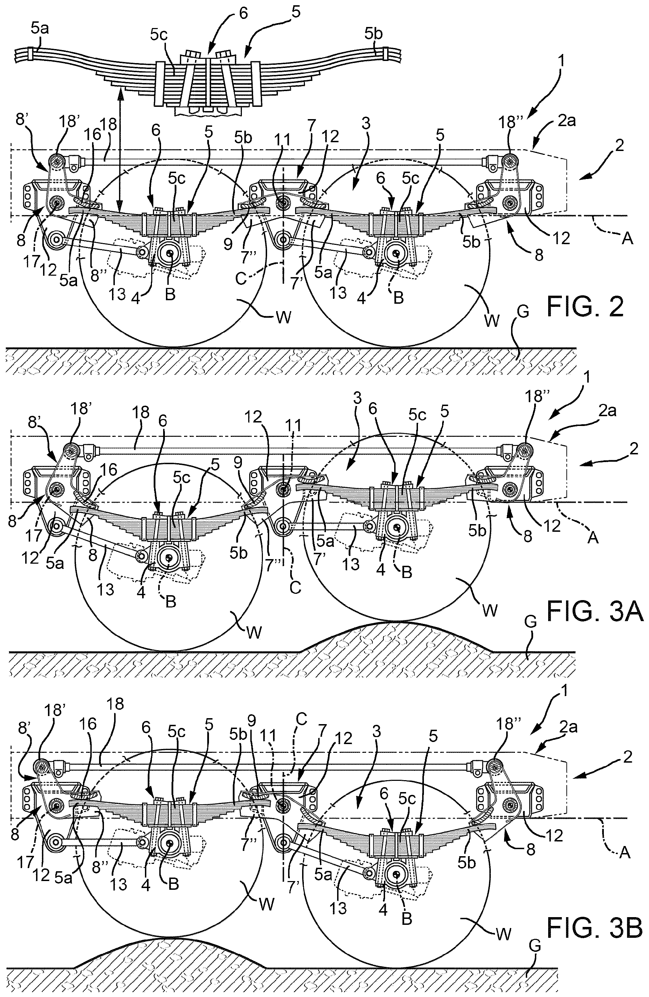

In the embodiment of Fig. 2, two axles 4 are present, connected by a suspension system provided with two leaf springs 5.

Advantageously, the aforesaid internal ends are connected to each other by a first rocker 7 comprising a first portion 7' and a second portion 7'' cooperating in contact respectively with a first end 5a of a leaf spring 5 and the second end 5b of the longitudinally adjacent spring.

In particular, the first rocker 7 is hinged via a first movable connection, such as a hinge 11, with respect to the side member 2a, in detail on a bracket 12 fixed thereto and extending towards the ground G.

Advantageously, the hinge 11 allows rotation of the first rocker 7 about an axis B transverse to the longitudinal axis A. Conveniently, the first and the second portion 7', 7" are inclined with respect to a vertical axis C, perpendicular to the axes A, B.

In detail, the portions 7', 7'' are inclined to be directed towards the ground G, i.e., defining between them an acute angle facing the ground G, and in particular are symmetrical with respect to the axis C.

Preferably, the internal ends of the leaf spring 5 are placed in contact with the portions 7', 7'' via a buffer 9 housed in the portions 7', 7".

As can be seen in the schematic figures, advantageously, the portions 7', 7'' have a C-shaped section, i.e., open on the side opposite the flange 12. In this case, this buffer 9 is carried by the transverse portion of the frame 2, so as to allow contact between the ends of the leaf springs 5 along the vertical axis C. Clearly, the portions 7'. 7'' can also have a closed, i.e., tubular, shape.

Advantageously, the aforesaid external ends are connected to one another by respective second rockers 8 comprising a first portion 8' cooperating in contact respectively with a first end 5a of a leaf spring 5 and the second end 5b of the longitudinally opposite spring.

In detail, the second rockers 8 are connected to the side member 2a via a second movable connection, such as a hinge 17, configured to allow a rotation about a transverse axis B and supported by a bracket 12, similarly to the hinge 11.

In detail, the aforesaid second rockers 8 comprise a second portion 8'', these second portions 8'' are operatively connected to each other by a connecting element 18, such as a rod.

In detail, the portions 8', 8'' are inclined, i.e., defining between them an acute angle facing in the opposite direction to the ground G and in particular are symmetrical with respect to the rotation axis of the hinge 17. In detail, the second portion 8'' extends along the vertical axis C, in the opposite direction to the ground G alongside the side member 2a.

Preferably, the ends of the leaf spring 5 are placed in contact with the portions 8', 8'' via a buffer 9 housed in the portions 8', 8".

Similarly to the first rocker 7, also the second rocker 8 has a C-shaped or tubular section and the buffer, in this case is carried by one of the walls of the second rocker to allow a contact along the vertical axis C.

In detail, the connecting element 18 extends along the longitudinal axis A and preferably has a constant section along this axis A. Further, it is facing the side member 2a in the direction of the transverse axis B.

Advantageously, the ends of the connecting element 18 are connected via respective hinges 18', 18" to the second portion 8'' of the second rockers 8. These hinges are configured to allow a rotation with respect to an axis parallel to the transverse axis B.

It must also be noted that the suspension system 3 comprises a longitudinal connecting element 13 operatively placed between the axle 4 and the bracket 12 to compensate for forces acting in this direction.

In detail, this longitudinal connecting element 13 comprises a rod hinged at its ends by respective hinges.

Operation of the first embodiment of the suspension system and of the vehicle according to the invention described above is as follows.

With reference to Figs. 3A - 3B, depending on the asperity of the ground G, one or more axles 4 can be lifted or lowered with respect to the frame 3. Consequently, the movement of the axle 4 is compensated for by the deformation of the springs 5. In particular, the deformation is reduced thanks to the movement of the rockers 7, 8 and in detail compensated for also by the connecting element 18.

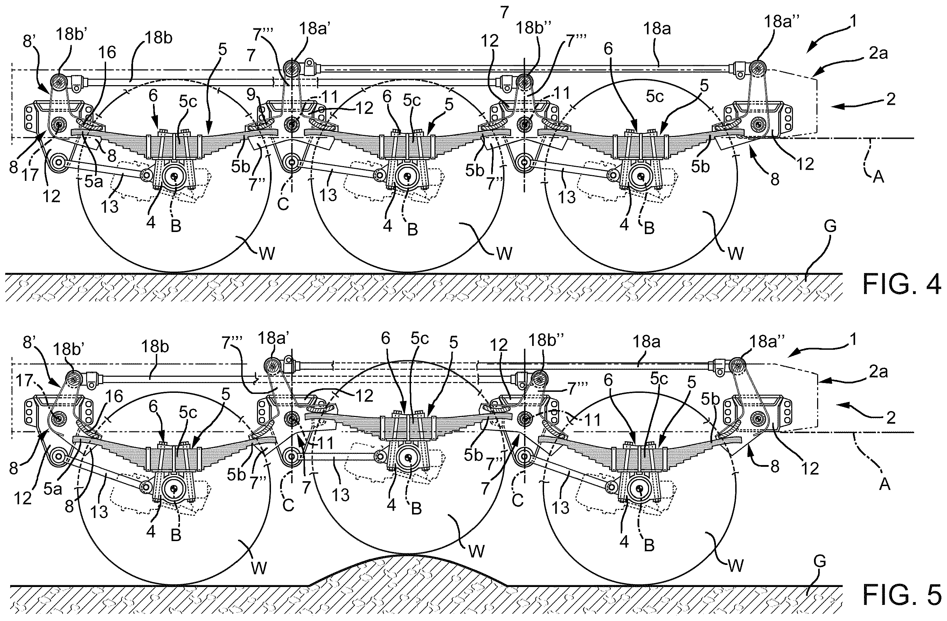

In the embodiment of Figs. 4 and 5, the vehicle 1 comprises three axles 4, each equipped with wheels W. Consequently, they are provided with three respective leaf springs 5.

In this embodiment, two first rockers 7 are present, each comprising a third portion 7''' connected to the first and second portion 7', 7".This third portion 7''' advantageously extends along the vertical axis C angularly equidistant with respect to the first and second portion 7', 7".

In this embodiment two connecting elements 18a, 18b are present, connecting between them respectively the two third portions 7''' with the second portions 8'' of the second rockers 8'.

In this case, a first connecting element 18a is hinged at its ends 18a', 18a'' between one of the first rockers 7 and one of the second rockers 8 and a second connecting element 18b is hinged at its ends 18b', 18b'' between the other of the first rockers 7 and the other of the second rockers 8.

Advantageously, the connecting elements 18a, 18b are of the same shape, parallel to each other and one is placed above the other along the vertical axis C. Consequently, the third portion 7‴ of one of the first rockers 7 extends further with respect to the third portion 7‴ of the other of the first rockers 7.

Operation of the second embodiment of the suspension system and of the vehicle according to the invention described above is as follows.

With reference to Fig. 5, operation is the same as that of the first embodiment, but there are two connecting elements 18a, 18b suitable to distribute the forces between the rockers 7, 8.

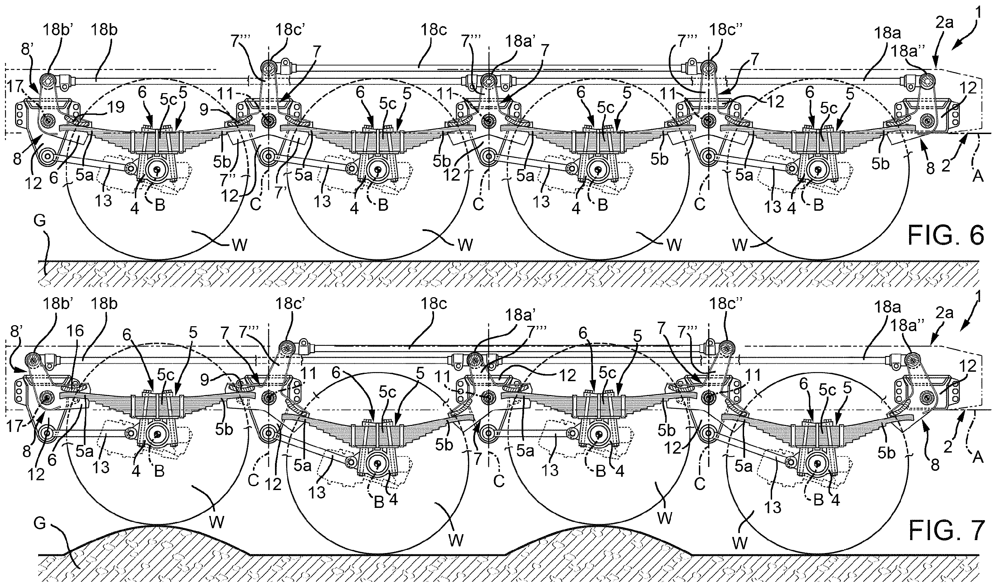

In the embodiment of Figs. 6 and 7, the vehicle 1 comprises four axles 4 each equipped with wheels W. Consequently, they are provided with four respective leaf springs 5.

In this embodiment there are three first rockers 7, each comprising a third portion 7‴ as described above in the second embodiment.

In this embodiment there are three connecting elements 18a, 18b, 18c, respectively connecting one of the third portions 7‴ with the second portions 8'' of the second rockers 8' and the other two third portions 7‴ to each other.

In this case, a first connecting element 18a is hinged at its ends 18a', 18a'' between one of the first rockers 7 and one of the second rockers 8, a second connecting element 18b is hinged at its ends 18b', 18a' between the other of the first rockers 7 and the other of the second rockers 8 and a third connecting element 18c is hinged at its ends 19 between two first rockers 7 adjacent to the one connected to the second rockers 8.

Advantageously, the connecting elements 18a, 18b, 18c are of the same shape, parallel to one another and one is placed above the other two along the vertical axis C, the other two being coaxial with each other. Consequently, the third portion 7‴ of the two first rockers 7 connected to each other extends further with respect to the third portion 7''' of the other of the first rockers 7.

Operation of the third embodiment of the suspension system and of the vehicle according to the invention described above is as follows.

With reference to Fig. 7, operation is the same as that of the first embodiment, but there are three connecting elements 18a, 18b, 18c suitable to distribute the forces between the rockers 7, 8.

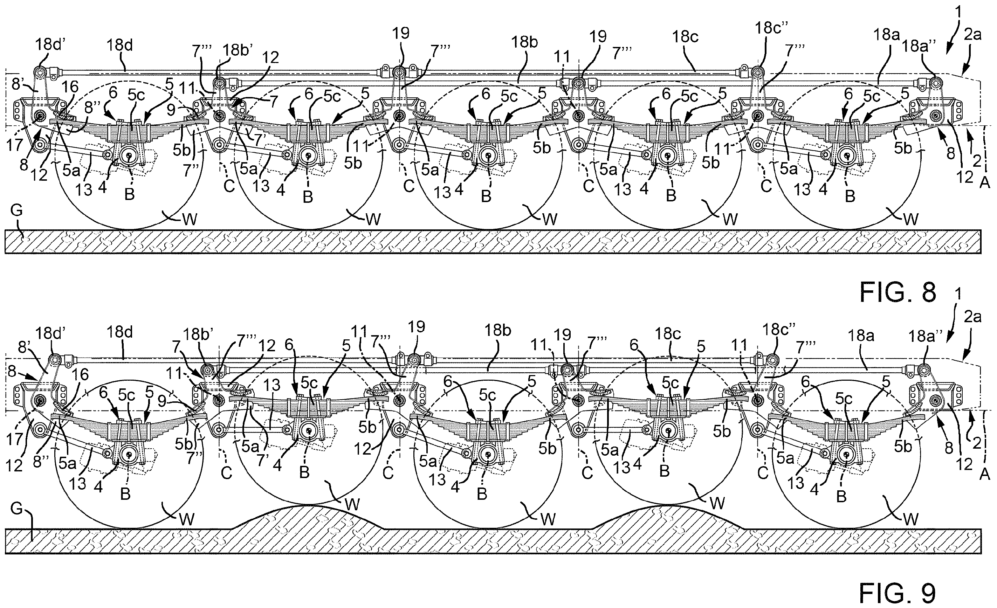

In the embodiment of Figs. 8 and 9, the vehicle 1 comprises five axles 4 each equipped with wheels W. Consequently, they are provided with five respective leaf springs 5.

In this embodiment there are four first rockers 7 each comprising a third portion 7‴ as described above in the second embodiment.

In this embodiment there are four connecting elements 18a, 18b, 18c, 18d, respectively connecting two of the third portions 7‴ with the second portions 8'' of the second rockers 8' and the other three third portions 7‴ to each other.

In this case, a first and a second connecting element 18a, 18b are connected to each other via a connection 19 and at their ends 18b', 18a'' respectively to one of the first rockers 7 and to one of the second rockers 8, and similarly a third and a fourth connecting element 18c, 18d are connected to each other via a connection 19 and at their ends 18d', 18c'' respectively to another of the first rockers 7 and to the other of the second rockers 8.

Advantageously, the connecting elements 18a, 18b, 18c, 18d are of the same shape, parallel to one another and placed two by two coaxial with each other. In detail, one pair is placed vertically above the other along the vertical axis C. Consequently, the third portion 7''' of two first rockers 7 connected to each other extends further with respect to the third portion 7‴ of the others of the first rockers 7.

Operation of the fourth embodiment of the suspension system and of the vehicle according to the invention described above is as follows.

With reference to Fig. 9, operation is the same as that of the first embodiment, but there are four connecting elements 18a, 18b, 18c, 18d suitable to distribute the forces between the rockers 7, 8.

With respect to what is described above, it is clear that the number of axles can vary and given N axles 4, where N is a number greater than two, there are a number N of leaf springs, a number N of second rockers 8 and a number N of first rockers 7 equipped with said third portion 7‴, the suspension system 3 comprises N-1 connecting elements 18 configured to connect said first and said second rockers 7, 8 to each other.

From the above, the advantages of the suspension system and of the vehicle according to the invention are evident.

Thanks to the proposed suspension system comprising second rockers operatively connected to each other, the suspension system allows a greater distribution of the loads between the leaf springs.

Consequently, not only is the suspension capacity of the suspension system increased, but the possibility of breakages is reduced and the fatigue life of the suspension system is increased.

In fact, as the load is better distributed between the leaf springs and as all the ends are movable, dangerous tensile overloads that impinge upon the useful life of the suspension system and can lead to unexpected breakages are avoided.

Finally, it is clear that modifications and variations can be made to the suspension system and to the vehicle according to the present invention without departing from the scope of protection defined by the claims.

Clearly, several axles connected with the same logic described above can be provided.

Likewise, the springs can be of a different type, and the rockers can have a different shape. Further, the hinges can be replaced by different types of movable connections.

## Claims

1. A suspension system (3) to connect at least two axles (4) to a frame (2) of a vehicle (1), said vehicle (1) extending along a longitudinal axis (A),
said suspension system (3) comprises an elastic element (5) extending along said longitudinal axis and comprising a first end (5a), a second end (5b) and an intermediate portion (5c), said intermediate portion (5c) being connected to the respective axle (4), said first and second ends (5a, 5b) being connected to said frame (2) via respective first and second rockers (7, 8), said suspension system (3) comprising at least one connecting element (18) connecting two between said first and second rockers (7, 8) to each other.

2. A suspension system according to claim 1, wherein said connecting element (18) comprises a rigid bar.

3. A suspension system according to claim 1 or 2, wherein said connecting element (18) extends along said longitudinal axis (A).

4. A suspension system according to one of claims 1 to 3, wherein said connecting element (18) is hinged at its ends to said two between said first and second rockers (7, 8).

5. A suspension system according to one of the previous claims, wherein said first and second rockers (7, 8) comprise at least two portions (7', 7'', 8', 8''), each cooperating with one of said first and second end (5a, 5b) and a movable connection with respect to said frame (2).

6. A suspension system according to claim 5, wherein said movable connection comprises a hinge (11, 17) movable along a transverse axis (B) with respect to said longitudinal axis (A).

7. A suspension system according to one of claims 5 or 6, wherein said portions (7', 7'', 8', 8'') are made in a single piece and inclined with respect to each other.

8. A suspension system according to one of claims 5 to 7, wherein said portions (7', 7'', 8', 8'') cooperate in contact with the respective first and second ends (5a, 5b) of said elastic element (5).

9. A system according to one of claims 5 to 8, wherein a portion (8'') of said second rocker (8) extends along a vertical axis (C) with respect to the ground (G), said second portion (8'') being connected to a portion of the others between said first and second rockers (7, 8) via said connecting element (18).

10. A system according to one of claims 5 to 9, wherein said first rocker (7) comprises a third portion (7‴) which extends along a vertical axis (C) with respect to the ground (G), said third portion (7‴) being connected to a portion of the others between said first and second rockers (7, 8) via said connecting element (18).

11. A system according to one of claims 5 to 9, wherein said vehicle (1) comprises two axles (4), said suspension system (3) comprising two elastic elements (5), a first rocker (7) placed between said two axles (4) and a pair of second rockers (8) longitudinally external to said axles (4), said connecting element (18) being hinged between said second ends (8'') of said second rockers (8).

12. A system according to claim 10, wherein said vehicle (1) comprises N axles (4), where N is a number greater than two, said suspension system comprising a number N of elastic elements (5), a number N of second rockers (8) and a number N of first rockers (7) equipped with said third portion (7‴), said suspension system (3) comprising a number N-1 of connecting elements (18) configured to connect said first and second rockers (7, 8) to each other.

13. A system according to claim 12, wherein at least some of said N-1 connecting elements (18) can be placed vertically spaced apart from each other.

14. A system according to claim 12 or 13, wherein at least some of said N-1 connecting elements (18) can be axially coincident with each other.

15. A system according to one of claims 12 to 14, wherein at least some of said N-1 connecting elements (18) can be hinged via a same hinge (19) on said third portion (7‴) of one of said first rockers (7).

16. A suspension system according to any of the previous claims, wherein said elastic element (5) is a leaf spring.

17. A suspension system according to any of the previous claims, wherein said suspension system (3) connects said axles (4) in a tandem configuration.

18. A suspension system according to any of the previous claims, wherein said suspension system (3) comprises respective longitudinal support elements (13) connecting a respective axle (4) to said frame (2).

19. A suspension system according to claim 18, wherein each longitudinal support element (13) comprises a rod hinged at its ends between said frame (2) and said axle (4).

20. A vehicle comprising a frame (2) and at least two axles (4) each supporting at least one pair of wheels (W) configured to allow the movement of said vehicle (1) with respect to the ground (G), said vehicle (1) comprising a suspension system (3) connecting said at least two axles (4) to said frame (2) according to one of the previous claims.
